# EUROPÄISCHE PATENTSCHRIFT

(11) **EP 2 683 525 B1**
(45) Veröffentlichungstag und Bekanntmachung des Hinweises auf die Patenterteilung: **17.12.2014**
(21) Anmeldenummer: 12706589.4
(22) Anmeldetag: 29.02.2012
(51) Int. Cl.: B23Q 1/00, B23Q 1/52, H01F 27/36

(54) **DREHÜBERTRAGER FÜR WERKZEUGMASCHINEN**
ROTARY TRANSMISSION DEVICE FOR MACHINE TOOLS
DISPOSITIF DE TRANSMISSION ROTATIF POUR MACHINE-OUTILS

(30) Priorität: 10.03.2011 DE 102011005339
(43) Veröffentlichungstag der Anmeldung: 15.01.2014
(73) Patentinhaber: Komet Group GmbH, 74354 Besigheim (DE)
(72) Erfinder: GRAF, Heiko, 76744 Wörth am Rhein (DE)
(74) Vertreter: Wolf, Eckhard
(86) Internationale Anmeldenummer: PCT/EP2012/053459
(87) Internationale Veröffentlichungsnummer: WO 2012/119908

(56) Entgegenhaltungen:
- EP-A2- 0 229 399
- EP-B1- 1 856 705
- FR-A1- 2 566 572

## Beschreibung

Die Erfindung betrifft einen Drehübertrager für Werkzeugmaschinen mit einem maschinenfesten Statorteil, einem werkzeugfesten, um eine Rotationsachse drehbaren Rotorteil und mit stator- und rotorseitigen Sende- und Empfangselementen zur bidirektionalen berührungsfreien Datenübertragung.

Drehübertrager dieser Art werden beispielsweise in Werkzeugmaschinen mit Verstellwerkzeugen eingesetzt (EP 1 856 705 B1). Bei dem vorbekannten Drehübertrager weisen die stator- und rotorseitigen Sende- und Empfangselemente einander paarweise zugeordnete, stator- und rotorseitige Kopplungswindungen für die induktive Datenübertragung auf, die an eine Sende- und Empfangselektronik angeschlossen sind. Weiter ist je eine statorseitige und eine rotorseitige, zu den Kopplungswindungen konzentrische Energiewicklung für die induktive Energieübertragung nach dem Transformatorprinzip vorgesehen. Die Energiewicklungen und die Kopplungswindungen sind durch je eine statorseitige und rotorseitige Kernpartie voneinander getrennt, wobei die statorseitigen und die rotorseitigen Kempartien an einander zugewandten Enden über einen Luftspalt getrennt sind. Ein gewisser Nachteil dieser bekannten Anordnung besteht darin, dass trotz der zwischen den Übertragungsstrecken für die Daten- und Energieübertragung angeordneten ferromagnetischen Kempartien eine nicht unerhebliche Störung der Datenübertragung durch die Energieübertragung erfolgt.

Eine weitere Verbesserung in dieser Hinsicht kann dadurch erzielt werden (EP 0 229 399), dass die Sende- und Empfangselemente als optoelektronische Bauelemente ausgebildet sind, die auf dem Rotorteil und dem Statorteil zu rotorseitigen und zu statorseitigen Sendergruppen und Empfängergruppen mit jeweils einer zugehörigen Sende- und Empfangselektronik zusammengefasst sind, wobei die Sende- und Empfangselemente der einander zugeordneten rotorseitigen und statorseitigen Sender- und Empfängergruppen über eine axiale Übertragungsstrecke einander paarweise zugewandt und so relativ zueinander angeordnet sind, dass in jeder Drehlage des Rotorteils gegenüber dem Statorteil die einander zugeordneten Sender- und Empfängergruppen über mindestens eines ihrer jeweiligen Sende- und Empfangselemente miteinander kommunizieren. Damit ist die Datenkommunikation bei drehendem und stehendem Rotorteil ununterbrochen sichergestellt.

Die zu lösende Aufgabe der Erfindung wird darin gesehen, dass in einer optoinduktiven Datenübertragungsstrecke Störungen der Sende- und Empfangselemente und deren Elektronik durch elektromagnetische Streufelder aus der induktiven Energieübertragungsstrecke oder Störungen wegen eingetretenen Spänen bzw. Staub weitgehend vermieden werden.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung besteht im Wesentlichen darin, dass die rotorseitigen und die statorseitigen Sende- und Empfangselemente mit ihrer Sende- und Empfangselektronik gegenüber dem Luftspalt axial zurückversetzt angeordnet und über eine Lichtleitstrecke mit einem zum Luftspalt hin lichtdurchlässigen Eintritts- oder Austrittsfenster verbunden und in einem gegenüber der Energieübertragungsstrecke abgeschirmten Gehäuse des Rotors oder Stators angeordnet sind. Die Lichtleitstrecke kann dabei durch eine lichtdurchlässige Zwischenschicht gebildet sein. Alternativ hierzu kann die Lichtleitstrecke einen Lichtleiter, ein Büschel von Lichtleitern oder einen lichtstreuenden Diffusor umfassen. Weiter kann es für die optimale Unterbringung von Verbindungskabeln und eine bessere Raumausnutzung von Vorteil sein, wenn in der Lichtleitstrecke insbesondere des Stators ein Spiegel oder ein Prisma zur Umlenkung eines mit den zu übertragenden Daten modulierten Lichtstrahls angeordnet ist.

Gemäß einer vorteilhaften Ausgestaltung der Erfindung sind die Sende- und Empfangselemente der einander zugeordneten Sender- und Empfängergruppen auf einem rotorseitigen und einem statorseitigen Kreis oder Kreisabschnitt mit etwa gleichem Radius in Bezug auf die Rotationsachse angeordnet. Dies kann beispielsweise dadurch erfolgen, dass die Sende- und Empfangselemente der einander zugeordneten Sender- und Empfängergruppen paarweise auf gleichen Radien angeordnet sind. Besonders vorteilhaft ist es, wenn alle Sende- und Empfangselemente auf dem gleichen Radius angeordnet sind.

Eine weitere vorteilhafte Ausgestaltung der Erfindung sieht vor, dass die Sende- und Empfangselemente der Sender- und Empfängergruppen in definierten Winkelabständen voneinander auf dem Rotorteil und dem Statorteil angeordnet sind.

Um den Zugriff zu dem Rotor mit einem automatischen Handhabungssystem zu ermöglichen, ist es von Vorteil, wenn das Statorteil mit seinen Sender- und Empfängergruppen und mit seiner Energiewicklung sich nur über ein Zylindersegment erstreckt, während das Rotorteil mit seinen Sender- und Empfängergruppen und seiner Energiewicklung sich über einen Vollzylinder erstrecken kann. Grundsätzlich ist auch eine Ausführungsvariante mit vollzylindrischem Statorteil denkbar.

Eine weitere vorteilhafte Ausgestaltung der Erfindung sieht vor, dass die Sendeelemente als Lichtemissionsdioden (LED) ausgebildet sind, während die Empfangselemente als Fotodioden oder Fotoelemente ausgebildet sein können. Vorteilhafterweise bilden die Sendeelemente und die Empfangselemente eine bauliche Einheit und sind für einen Halbduplexbetrieb wahlweise umschaltbar.

Im Folgenden wird die Erfindung anhand der in der Zeichnung in schematischer Weise dargestellten Ausführungsbeispiele näher erläutert. Es zeigen
- Fig. 1: eine Seitenansicht eines in eine Maschinenspindel eingespannten Werkzeugkopfs mit Drehübertrager für die Energie- und Datenübertragung in teilweise geschnittener Darstellung;
- Fig. 2a: eine Draufsicht auf den Drehübertrager von der Statorseite aus gesehen für eine Datenübertragung im Halbduplexbetrieb;
- Fig. 2b: einen Schnitt entlang der Schnittlinie A-A der Fig. 2a;
- Fig. 2c: eine Darstellung entsprechend Fig. 2a für eine Datenübertragung im Vollduplexbetrieb;
- Fig. 3a: bis c einen Schnitt durch den Drehübertrager für drei verschiedene Ausführungsvarianten in einer ausschnittsweisen Darstellung entsprechend Fig. 2b.

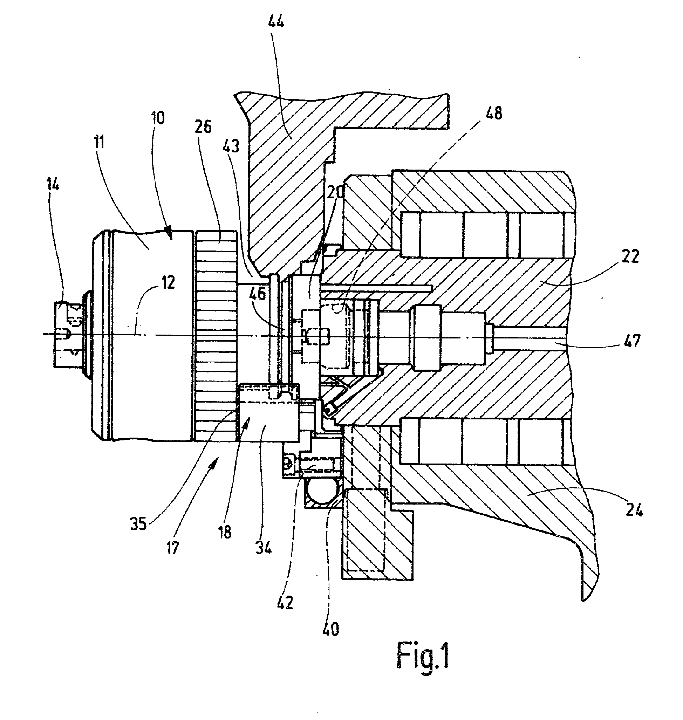

Der in Fig. 1 dargestellte, als Feindrehkopf ausgebildete Werkzeugkopf 10 besteht im Wesentlichen aus einem Grundkörper 11, einem quer zur Drehachse 12 des Werkzeugkopfs 10 gegenüber dem Grundkörper 11 verstellbaren, ein Schneidwerkzeug aufweisenden Schieber 14, mindestens einem innerhalb des Werkzeugkopfs 10 angeordneten, nicht dargestellten Stromverbraucher, beispielsweise in Form einer Messeinrichtung zur direkten Verstellwegmessung sowie einem elektrischen Verstellmotor für den Schieber 14. Die Stromversorgung der Stromverbraucher und der Datenaustausch erfolgt über einen Drehübertrager 17, der aus einem Statorteil 18 und einem Rotorteil 26 besteht. Der Werkzeugkopf 10 ist mit einem axial über den Grundkörper 11 überstehenden Werkzeugschaft 20 mit der Maschinenspindel 22 einer Werkzeugmaschine 24 kuppelbar. Zur Einstellung eines Luftspalts 35 zwischen dem Stator- und dem Rotorteil ist das Statorgehäuse 34 an einem statorfesten Halter 40 mittels eines Verstellmechanismus 42 sowohl in seinem Abstand zum Rotor als auch in seiner Drehlage um eine zur Drehachse 12 parallele Achse verstellbar angeordnet.

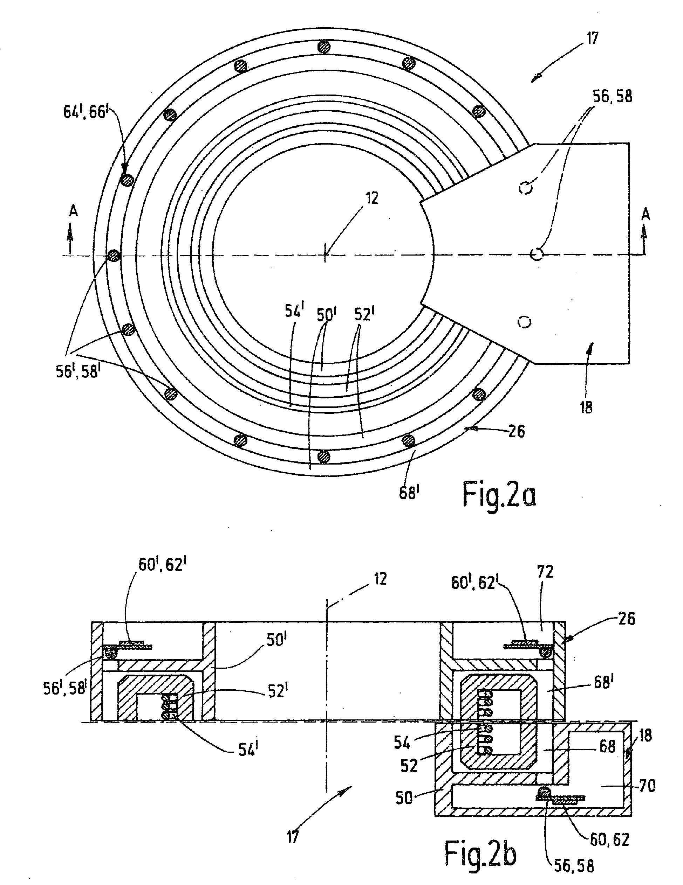

Bei dem in Fig. 1 und 2a und b gezeigten Ausführungsbeispiel erstreckt sich das Statorteil 18 segmentartig nur über einen Teilumfang von etwa 60° bis 70° des Werkzeugschafts 20 und lässt den überwiegenden Teil des Schaftumfangs unter Bildung eines Freiraums 43 für den Zugriff eines Werkzeuggreifers 44 für den automatischen Werkzeugwechsel frei. Beim Werkzeugwechsel wird der Werkzeugkopf 10 an der Greiferrille 46 vom Werkzeuggreifer 44 von der dem Statorteil gegenüberliegenden Seite her erfasst und bei gelöster Werkzeugkupplung axial gegenüber der Maschinenspindel 22 verschoben. Die Kupplung des Werkzeugkopfes 10 mit der Maschinenspindel 22 erfolgt über einen maschinenseitig über die Zugstange 47 betätigbaren Spannmechanismus, der von der Maschinenseite aus in den Hohlraum 48 des Werkzeugschafts 20 eingreift und den Werkzeugkopf unter Herstellung einer Planflächenverspannung und einer Radialverspannung mit der Maschinenspindel 22 kuppelt.

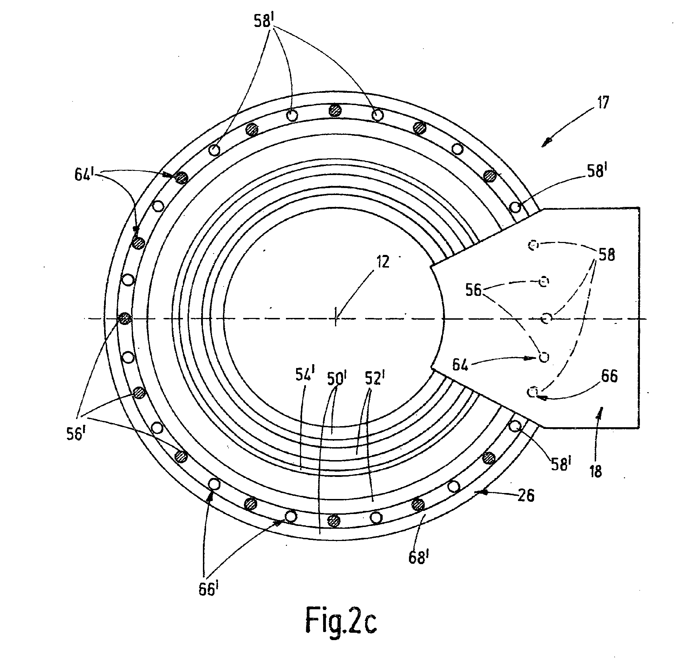

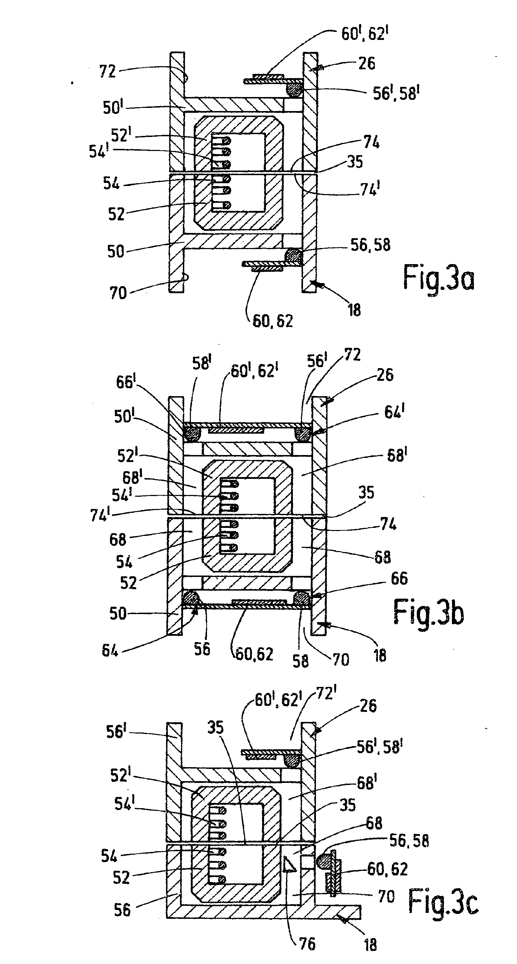

Die berührungslose Energieübertragung zwischen Statorteil 18 und Rotorteil 26 erfolgt nach dem Transformatorprinzip. Zu diesem Zweck weisen das Statorteil 18 und das Rotorteil 26 jeweils eine in einem Gehäuse 50,50' angeordnete Kernpartie 52,52' aus ferromagnetischem Material sowie je eine auf die statorseitige und die rotorseitige Kernpartie 52,52' aufgewickelte Energiewicklung 54,54' auf. In den Fig. 2a, b und c sowie 3a, b und c sind die Energiewicklungen 54,54' und die Kernpartien 52,52' schematisch als Ringelemente dargestellt, die konzentrisch zur Drehachse 12 angeordnet sind.

Die Sende- und Empfangselemente 56,58';56',58 für die Datenübertragung sind als optoelektronische Bauelemente ausgebildet. Bei den Sendeelementen 56,56' handelt es sich um Lichtemissionsdioden (LED) und bei den Empfangselementen 58,58' um Fotodioden oder um optoelektronische Fotoelemente. Den Sendeelementen 56,56' ist eine Sendeelektronik 60,60' und den Empfangselementen 58,58' eine Empfangselektronik 62,62' zugeordnet. Die Sendeelemente 56,56' und die Empfangselemente 58,58' sind sowohl auf der Statorseite als auch auf der Rotorseite zu Sendergruppen 64,64' und zu Empfängergruppen 66,66' zusammengefasst. Dabei sind die einander zugeordneten rotorseitigen und statorseitigen Sender- und Empfängergruppen 64,66';64',66 über eine axiale Lichtleitstrecke 68,68' einander paarweise zugewandt und so relativ zueinander auf zur Rotationsachse 12 konzentrischen Kreisen angeordnet (Fig. 2a), dass in jeder Drehlage des Rotorteils 26 gegenüber dem Statorteil 18 die einander zugeordneten Sender- und Empfängergruppen 64,66';64',66 über mindestens eines ihrer jeweiligen Sende- und Empfangselemente 56,58';56',58 miteinander kommunizieren.

Bei den in Fig. 2a, 3a und 3c gezeigten Ausführungsbeispielen können die Sende- und Empfangselemente 56,58;56',58' in einem Bauteil zusammengefasst werden. Um eine bidirektionale Datenübertragung zu ermöglichen, werden dabei die gruppenweise kombinierten Sende- und Empfangselemente 56,58';56',58 im Halbduplexverfahren abwechselnd über ihre Sende- und Empfangselektronik 60,62';60',62 als Sender und als Empfänger betrieben. Die Umschaltung erfolgt zentralgesteuert in der Weise, dass abwechselnd Daten vom Statorteil 18 zum Rotorteil 26 und vom Rotorteil 26 zum Statorteil 18 übertragen werden.

Bei einer Anordnung gemäß Fig. 2c ist es auch möglich, die jeweils auf dem gleichen Kreisdurchmesser angeordneten Sendergruppen 64,64' und Empfängergruppen 66,66' im Vollduplexverfahren zu betreiben, wenn die richtungsverschieden einander zugeordneten Sendeelemente 56,56' und Empfangselemente 58,58' verschieden farbiges Licht emittieren und empfangen (z.B. 56,58' rot und 56',58 grün) und dadurch in der jeweils anderen Gruppe nicht stören.

Bei dem in Fig. 3b gezeigten Ausführungsbeispiel sind auf dem Statorteil 18 und auf dem Rotorteil 26 jeweils eine Sendergruppe 64,64' und eine Empfängergruppe 66,66' vorgesehen, die auf unterschiedlichen Radien des Statorteils 18 und des Rotorteils 26 angeordnet sind. Mit dieser Anordnung ist eine bidirektionale Datenübertragung im Vollduplexverfahren auch bei gleichen Trägerlichtfarben möglich. Die im Rotorteil 26 und im Statorteil 18 einander zugewandten Sender- und Empfängergruppen 64,66';64',66 kommunizieren in entgegengesetzten Richtungen vom Statorteil 18 zum Rotorteil 26 und vom Rotorteil 26 zum Statorteil 18.

Wie aus Fig. 2a und 3a bis c zu ersehen ist, sind die Sende- und Empfangselemente 56,56',58,58' sowohl im Statorteil 18 als auch im Rotorteil 26 gegenüber dem Luftspalt 35 axial zurückversetzt in einem eigenen Gehäuseabschnitt 70,72 angeordnet. Die optische Kopplung zwischen den Sende- und Empfangselementen 56,58';56',58 erfolgt über Lichtleitstrecken 68,68' und über den Luftspalt 35 einander zugewandte Ein- und Austrittsfenster 74,74' der Lichtleitstrecken 68,68'. Der Axialversatz der optoelektronischen Sende- und Empfangselemente 56,56',58,58' und der zugehörigen Sende- und Empfangselektronik 60,60',62,62' sorgt dafür, dass eine ausreichende Abschirmung gegenüber elektromagnetischer Streustrahlung aus der Energieübertragungsstrecke und damit auch bei hohen Übertragungsleistungen im Energiebereich ein störungsfreier Datenaustausch möglich ist. Die Lichtleitstrecke 68,68' kann beispielsweise durch eine lichtdurchlässige Zwischenschicht gebildet sein. Grundsätzlich können hierfür auch Lichtleiter oder Büschel von Lichtleitern eingesetzt werden. Um eine Verbreiterung der Lichtübertragung zu erhalten, kann die Lichtleitstrecke auch als Licht leitender Diffusor ausgebildet sein.

Eine Besonderheit des in Fig. 3c gezeigten Ausführungsbeispiels besteht darin, dass in der Lichtleitstrecke 68 auf der Statorseite 18 ein Spiegel oder ein Prisma 76 zur Umlenkung eines für die Datenübertragung verwendeten Lichtstrahls angeordnet ist. Mit dieser Maßnahme ist es möglich, die axiale Ausdehnung des Statorgehäuses 34 und damit dessen Störkontur klein zu halten.

Grundsätzlich ist es möglich, für das Statorteil 18 ein zweiteiliges Gehäuse 34 zu verwenden, das aus einem Grundgehäuse und einem Wechselgehäuse zusammengesetzt ist. Das Grundgehäuse kann dabei an dem statorfesten Halter 40 fixiert werden, während das Wechselgehäuse an einer nicht dargestellten Trennstelle lösbar am Grundgehäuse befestigt sein kann. Im Grundgehäuse kann die Sende- und Empfangselektronik 60,62 sowie die Signalaufbereitungselektronik und die Elektrik für die Energieversorgung auf einer Platine angeordnet werden, die über ein durch eine Öffnung im Grundgehäuse hindurchgreifendes Kabel mit der Maschinensteuerung verbunden werden kann. Die Energiewicklung 54,54' ist in eine Gießmasse aus Kunstharz mit abriebfestem Zusatz, wie z.B. Keramik, Gesteinsmehl, Glasfaserstoffe eingebettet und befindet sich im Wechselgehäuse hinter einem Gehäusefenster. Auch die Lichtleitstrecke 68,68' kann aus einem Kunstharz mit abriebfestem Zusatz bestehen. Um die Statorwicklungen 54 vor unnötigem Verscheiß zu schützen, kann das Wechselgehäuse vor allem beim Einsatz von Werkzeugen herkömmlicher Bauart, die kein das Statorteil 18 übergreifendes Rotorteil 26 aufweisen, mit einfachen Handgriffen entfernt werden, ohne dass das Grundgehäuse abgenommen werden muss. Eine zusätzliche Möglichkeit für den Verschleißschutz besteht darin, dass das Gehäusefenster des Statorteils 18 bei Nichtgebrauch durch einen nicht dargestellten Deckel verschlossen wird. Der Vorgang des Aufsetzens und Abnehmens des Deckels kann automatisiert werden.

Zusammenfassend ist folgendes festzuhalten: Die Erfindung bezieht sich auf einen Drehübertrager 17 für Werkzeugmaschinen mit einem maschinenfesten Statorteil 18, einem werkzeugfesten, um eine Rotationsachse 12 drehbaren Rotorteil 26 und mit stator- und rotorseitigen Sende- und Empfangselementen 56,58';56',58 zur bidirektionalen berührungsfreien Datenübertragung. Um auch bei induktiver Energieübertragung mit hoher Leistung eine störungsfreie Datenübertragung zu gewährleisten, wird gemäß der Erfindung vorgeschlagen, dass die Sende- und Empfangselemente 56,56',58,58' als optoelektronische Bauelemente ausgebildet sind, die auf dem Statorteil 18 und Rotorteil 26 zu statorseitigen und zu rotorseitigen Sendergruppen 64,64' und Empfängergruppen 66,66' mit jeweils einer zugehörigen Sende- und Empfangselektronik 60,62,60',62' zusammengefasst sind. Die Sende- und Empfangselemente 56,58';56',58 der einander zugeordneten rotorseitigen und statorseitigen Sender- und Empfängergruppen 64,66';64',66 sind über eine axiale Lichtleitstrecke 68,68' einander paarweise zugewandt und so relativ zueinander angeordnet, dass in jeder Drehlage des Rotorteils 26 gegenüber dem Statorteil 18 die einander zugeordneten Sender- und Empfängergruppen 64,66';64',66 über mindestens eines ihrer Sende- und Empfangselemente 56,58';56',58 miteinander kommunizieren.

### Bezugszeichenliste:

- 10: Werkzeugkopf
- 11: Grundkörper
- 12: Drehachse
- 14: Schieber
- 17: Drehübertrager
- 18: Statorteil
- 20: Werkzeugschaft
- 22: Maschinenspindel
- 24: Werkzeugmaschine
- 26: Rotorteil
- 34: Statorgehäuse
- 35: Luftspalt
- 40: Halter
- 42: Verstellmechanismus
- 43: Freiraum
- 44: Werkzeuggreifer
- 46: Greiferrille
- 47: Zugstange
- 48: Hohlraum
- 50,50': Gehäuse
- 52,52': Kernpartie
- 54,54': Energiewicklung
- 56,56': Sendeelemente
- 58,58': Empfangselemente
- 60,60': Sendeelektronik
- 62,62': Empfangselektronik
- 64,64': Sendergruppen
- 66,66': Empfängergruppen
- 68,68': Lichtleitstrecke
- 70,72: Gehäuseabschnitt
- 74,74': Ein- und Austrittsfenster
- 76: Prisma oder Spiegel

## Patentansprüche

1. Drehübertrager für Werkzeugmaschinen mit einem maschinenfesten Statorteil (18), einem werkzeugfesten, um eine Rotationsachse (12) drehbaren Rotorteil (26) und mit stator- und rotorseitigen Sende- und Empfangselementen (56,56',58,58') zur bidirektionalen berührungsfreien Datenübertragung, wobei die Sende- und Empfangselemente (56,56',58,58') als optoelektronische Bauelemente ausgebildet sind, die auf dem Statorteil (18) und dem Rotorteil (26) zu statorseitigen und zu rotorseitigen Sendergruppen (64,64') und Empfängergruppen (66,66') mit jeweils einer zugehörigen Sende- und Empfangselektronik (60,60',62,62') zusammengefasst sind, wobei die Sende- und Empfangselemente (56,58';56',58) einander paarweise zugewandt und so relativ zueinander angeordnet sind, dass in jeder Drehlage des Rotorteils (26) gegenüber dem Statorteil (18) die einander zugeordneten Sender- und Empfängergruppen (64,66';64',66) über mindestens eines ihrer jeweiligen Sende- und Empfangselemente (56,58';56',58) miteinander kommunizieren, und wobei je eine statorseitige und eine rotorseitige, durch einen Luftspalt (35) voneinander getrennte Energiewicklung (54,54') für die induktive Energieübertragung nach dem Transformatorprinzip vorgesehen ist, **dadurch gekennzeichnet, dass** die statorseitigen und die rotorseitigen Energiewicklungen einander über einen axialen Luftspalt (35) zugewandt und zur jeweils benachbarten Sender- und Empfängergruppe (64,66',64',66) bezüglich der Rotationsachse konzentrisch angeordnet sind, und dass die statorseitigen und die rotorseitigen Sende- und Empfangselemente (56,56',58,58') mit ihrer Sende- und Empfangselektronik (60,60',62,62') gegenüber dem Luftspalt (35) axial zurückversetzt in einem gegenüber den Energiewicklungen (54,54') abgeschirmten Gehäuse (50,50') des Statorteils (18) oder Rotorteils (26) angeordnet und optisch über je eine axiale Lichtleitstrecke (68,68') mit einem zum Luftspalt (35) hin lichtdurchlässigen Eintritts- oder Austrittsfenster (74,74') gekoppelt sind.

2. Drehübertrager nach Anspruch 1, **dadurch gekennzeichnet, dass** die Sende- und Empfangselemente (56,58';56',58) der einander zugeordneten Sender- und Empfängergruppen (64,66';64',66) auf einem statorseitigen und einem rotorseitigen Kreis oder Kreisabschnitt mit etwa gleichem Radius in Bezug auf die Rotationsachse (12) angeordnet sind.

3. Drehübertrager nach Anspruch 1 oder 2, **dadurch gekennzeichnet, dass** die Sende- und Empfangselemente (56,58';56',58) der einander zugeordneten Sender- und Empfängergruppen (64,66';64',66) paarweise auf gleichen Radien angeordnet sind.

4. Drehübertrager nach einem der Ansprüche 1 bis 3, **dadurch gekennzeichnet, dass** alle Sende- und Empfangselemente (56,56',58,58') auf dem gleichen Radius angeordnet sind.

5. Drehübertrager nach Anspruch 4, **dadurch gekennzeichnet, dass** die Sende- und Empfangselemente (56,58';56',58) der richtungsverschieden einander zugeordneten Sender- und Empfängergruppen (64,66';64',66) verschieden farbiges Licht emittieren und empfangen.

6. Drehübertrager nach einem der Ansprüche 1 bis 5, **dadurch gekennzeichnet, dass** die Sende- und Empfangselemente (56,56',58,58') der Sender- und Empfängergruppen (64,64',66,66') in definierten Winkelabständen voneinander auf dem Statorteil (18) und dem Rotorteil (26) angeordnet sind.

7. Drehübertrager nach einem der Ansprüche 1 bis 6, **dadurch gekennzeichnet, dass** das Statorteil (18) mit seinen Sender- und Empfängergruppen (64,66) und mit seiner Energiewicklung (54) sich über ein Zylindersegment erstreckt.

8. Drehübertrager nach einem der Ansprüche 1 bis 7, **dadurch gekennzeichnet, dass** das Rotorteil (26) mit seinen Sender- und Empfängergruppen (64',66') und seiner Energiewicklung (54') sich über einen Vollzylinder erstreckt.

9. Drehübertrager nach einem der Ansprüche 1 bis 8, **dadurch gekennzeichnet, dass** die Sendeelemente (56,56') als Lichtemissionsdioden (LED) ausgebildet sind.

10. Drehübertrager nach einem der Ansprüche 1 bis 9, **dadurch gekennzeichnet, dass** die Empfangselemente (58,58') als Fotoelemente oder Fotodioden ausgebildet sind.

11. Drehübertrager nach einem der Ansprüche 1 bis 10, **dadurch gekennzeichnet, dass** die Lichtleitstrecke (68,68') durch eine lichtdurchlässige Zwischenschicht gebildet ist.

12. Drehübertrager nach Anspruch 11, **dadurch gekennzeichnet, dass** die Lichtleitstrecke (68,68') einen Lichtleiter oder ein Büschel von Lichtleitem umfasst.

13. Drehübertrager nach Anspruch 11 oder 12, **dadurch gekennzeichnet, dass** die Lichtleitstrecke (68,68') einen Licht leitenden Diffusor umfasst.

14. Drehübertrager nach einem der Ansprüche 11 bis 13, **dadurch gekennzeichnet, dass** in der Lichtleitstrecke (68,68') ein Spiegel oder ein Prisma (76) zur Umlenkung eines für die Datenübertragung verwendeten Lichtstrahls angeordnet ist.

15. Drehübertrager nach Anspruch 14, **dadurch gekennzeichnet, dass** die Sende- und Empfangselemente (56,58';56',58) der einander zugeordneten Sender- und Empfängergruppen (64,66';64',66) auf je einem statorseitigen und einem rotorseitigen Kreis oder Kreisabschnitt mit paarweise unterschiedlichen Radien in Bezug auf die Rotationsachse (12) angeordnet sind.

## Claims

1. A rotary transmission device for machine tools having a stator part (18) which is fixed to the machine, a rotor part (26) which is fixed to the tool and can be rotated about a rotation axis (12), and having stator- and rotor-side transmitting and receiving elements (56, 56', 58, 58') for bidirectional data transmission without contact, wherein the transmitting and receiving elements (56, 56', 58, 58') are in the form of optoelectronic components which are combined on the stator part (18) and the rotor part (26) to form stator-side and rotor-side transmitter groups (64, 64') and receiver groups (66, 66') which each have an associated transmitting and receiving electronics system (60, 60', 62, 62'), wherein the transmitting and receiving elements (56, 58'; 56', 58) face one another in pairs and are arranged relative to one another such that, in each rotation position of the rotor part (26) with respect to the stator part (18), the associated transmitter and receiver groups (64, 66'; 64', 66) communicate with one another by means of at least one of their respective transmitting and receiving elements (56, 58'; 56', 58), and wherein in each case a stator-side and a rotor-side power winding (54, 54') is provided for inductive power transmission in accordance with the transformer principle, said power windings being separated from one another by an air gap (35), **characterized in that** the stator-side and the rotor-side power windings face one another across an axial air gap (35) and are arranged concentrically to the respectively adjacent transmitter and receiver group (64, 66', 64', 66) with respect to the rotation axis, and **in that** the stator-side and the rotor-side transmitting and receiving elements (56, 56', 58, 58'), together with their transmitting and receiving electronics systems (60, 60', 62, 62'), are arranged axially offset with respect to the air gap (35) in a housing (50, 50'), which is shielded from the power windings (54, 54'), of the stator part (18) or rotor part (26) and are optically coupled to an inlet or outlet window (74, 74'), which is transparent in the direction of the air gap (35), by means of in each case one axial light guide section (68, 68').

2. The rotary transmission device as claimed in claim 1, **characterized in that** the transmitting and receiving elements (56, 58'; 56', 58) of the associated transmitter and receiver groups (64, 66'; 64', 66) are arranged on a stator-side and a rotor-side circle or segment of a circle with an approximately identical radius with respect to the rotation axis (12).

3. The rotary transmission device as claimed in claim 1 or 2, **characterized in that** the transmitting and receiving elements (56, 58'; 56', 58) of the associated transmitter and receiver groups (64, 66'; 64', 66) are arranged in pairs on identical radii.

4. The rotary transmission device as claimed in one of claims 1 to 3, **characterized in that** all the transmitting and receiving elements (56, 56', 58, 58') are arranged on the same radius.

5. The rotary transmission device as claimed in claim 4, **characterized in that** the transmitting and receiving elements (56, 58'; 56', 58) of the associated transmitter and receiver groups (64, 66'; 64', 66) which have different directions emit and receive different colored light.

6. The rotary transmission device as claimed in one of claims 1 to 5, **characterized in that** the transmitting and receiving elements (56, 56', 58, 58') of the transmitter and receiver groups (64, 64', 66, 66') are arranged at defined angular distances from one another on the stator part (18) and the rotor part (26).

7. The rotary transmission device as claimed in one of claims 1 to 6, **characterized in that** the stator part (18) extends over a cylindrical segment by way of its transmitter and receiver groups (64, 66) and by way of its power winding (54).

8. The rotary transmission device as claimed in one of claims 1 to 7, **characterized in that** the rotor part (26) extends over a full cylinder by way of its transmitter and receiver groups (64', 66') and its power winding (54').

9. The rotary transmission device as claimed in one of claims 1 to 8, **characterized in that** the transmitting elements (56, 56') are in the form of light-emitting diodes (LED).

10. The rotary transmission device as claimed in one of claims 1 to 9, **characterized in that** the receiving elements (58, 58') are in the form of photo elements or photodiodes.

11. The rotary transmission device as claimed in one of claims 1 to 10, **characterized in that** the light guide section (68, 68') is formed by a transparent intermediate layer.

12. The rotary transmission device as claimed in claim 11, **characterized in that** the light guide section (68, 68') comprises a light guide or a bundle of light guides.

13. The rotary transmission device as claimed in claim 11 or 12, **characterized in that** the light guide section (68, 68') comprises a diffuser which guides light.

14. The rotary transmission device as claimed in one of claims 11 to 13, **characterized in that** a mirror or a prism (76) for deflecting a light beam which is used for data transmission is arranged in the light guide section (68, 68').

15. The rotary transmission device as claimed in claim 14, **characterized in that** the transmitting and receiving elements (56, 58'; 56', 58) of the associated transmitter and receiver groups (64, 66'; 64', 66) are arranged on a respective stator-side and a rotor-side circle or segment of a circle with radii, which differ in pairs, with respect to the rotation axis (12).

## Revendications

1. Dispositif de transmission rotatif pour machines-outils, avec une partie stator (18) solidaire de la machine, avec une partie rotor (26) solidaire de l'outil et rotative autour d'un axe de rotation (12), et avec des éléments émetteurs et récepteurs (56, 56', 58, 58') côté stator et côté rotor, destinés à la transmission bidirectionnelle de données sans contact, sachant que les éléments émetteurs et récepteurs (56, 56', 58, 58') sont réalisés sous forme de composants optoélectroniques qui, sur la partie stator (18) et la partie rotor (26), sont regroupés en groupes émetteurs (64, 64') et groupes récepteurs (66, 66') côté stator et côté rotor, avec un système électronique émetteur et récepteur respectivement associé (60, 60', 62, 62'), sachant que les éléments émetteurs et récepteurs (56, 58' ; 56', 58) se font mutuellement face par paires et sont disposés les uns par rapport aux autres tel que, dans chaque position de rotation de la partie rotor (26) par rapport à la partie stator (18), les groupes émetteurs et récepteurs (64, 66' ; 64', 66) mutuellement associés communiquent entre eux par l'intermédiaire d'au moins un de leurs éléments émetteurs et récepteurs respectifs (56, 58' ; 56', 58), et sachant qu'un bobinage d'énergie respectif (54) côté stator et un bobinage d'énergie respectif (54') côté rotor, séparés l'un de l'autre par un entrefer (35) sont prévus pour la transmission d'énergie par induction selon le principe du transformateur, **caractérisé en ce que** les bobinages d'énergie côté stator et les bobinages d'énergie côté rotor sont disposés en se faisant mutuellement face par l'intermédiaire d'un entrefer axial (35) et sont disposés concentriquement relativement à l'axe de rotation par rapport au groupe émetteur et récepteur (64, 66', 64', 66) respectivement voisin, et **en ce que** les éléments émetteurs et récepteurs côté stator et les éléments émetteurs et récepteurs côté rotor (56, 56', 58, 58'), avec leur système électronique émetteur et récepteur (60, 60', 62, 62'), sont disposés en étant axialement en retrait par rapport à l'entrefer (35) dans un boîtier (50, 50'), isolé par rapport aux bobinages d'énergie (54, 54'), de la partie stator (18) ou de la partie rotor (26), et sont couplés optiquement, par l'intermédiaire d'un parcours axial de conduction de lumière respectif (68, 68'), à une fenêtre d'entrée ou de sortie (74, 74') laissant passer la lumière en direction de l'entrefer (35).

2. Dispositif de transmission rotatif selon la revendication 1, **caractérisé en ce que** les éléments émetteurs et récepteurs (56, 58' ; 56', 58) des groupes émetteurs et récepteurs mutuellement associés (64, 66' ; 64', 66) sont disposés sur un cercle ou un segment de cercle côté stator et sur un cercle ou un segment de cercle côté rotor avec approximativement le même rayon par rapport à l'axe de rotation (12).

3. Dispositif de transmission rotatif selon la revendication 1 ou 2, **caractérisé en ce que** les éléments émetteurs et récepteurs (56, 58' ; 56', 58) des groupes émetteurs et récepteurs mutuellement associés (64, 66' ; 64', 66) sont disposés par paires sur des rayons identiques.

4. Dispositif de transmission rotatif selon l'une des revendications 1 à 3, **caractérisé en ce que** tous les éléments émetteurs et récepteurs (56, 58' ; 56', 58) sont disposés sur le même rayon.

5. Dispositif de transmission rotatif selon la revendication 4, **caractérisé en ce que** les éléments émetteurs et récepteurs (56, 58' ; 56', 58) des groupes émetteurs et récepteurs mutuellement associés et de directions différentes (64, 66' ; 64', 66) émettent et reçoivent de la lumière de couleur différente.

6. Dispositif de transmission rotatif selon l'une des revendications 1 à 5, **caractérisé en ce que** les éléments émetteurs et récepteurs (56, 58' ; 56', 58) des groupes émetteurs et récepteurs (64, 66' ; 64', 66) sont disposés à des espacements angulaires définis les uns des autres sur la partie stator (18) et la partie rotor (26).

7. Dispositif de transmission rotatif selon l'une des revendications 1 à 6, **caractérisé en ce que** la partie stator (18), avec ses groupes émetteurs et récepteurs (64, 66) et avec son bobinage d'énergie (54), s'étend sur un segment de cylindre.

8. Dispositif de transmission rotatif selon l'une des revendications 1 à 7, **caractérisé en ce que** la partie rotor (26), avec ses groupes émetteurs et récepteurs (64', 66') et avec son bobinage d'énergie (54'), s'étend sur un cylindre complet.

9. Dispositif de transmission rotatif selon l'une des revendications 1 à 8, **caractérisé en ce que** les éléments émetteurs (56, 56') sont réalisés sous forme de diodes électroluminescentes (DEL).

10. Dispositif de transmission rotatif selon l'une des revendications 1 à 9, **caractérisé en ce que** les éléments récepteurs (58, 58') sont réalisés sous forme de cellules photoélectriques ou de photodiodes.

11. Dispositif de transmission rotatif selon l'une des revendications 1 à 10, **caractérisé en ce que** le parcours de conduction de lumière (68, 68') est formé par une couche intermédiaire laissant passer la lumière.

12. Dispositif de transmission rotatif selon la revendication 11, **caractérisé en ce que** le parcours de conduction de lumière (68, 68') comprend un conducteur de lumière ou un faisceau de conducteurs de lumière.

13. Dispositif de transmission rotatif selon la revendication 11 ou 12, **caractérisé en ce que** le parcours de conduction de lumière (68, 68') comprend un diffuseur conduisant la lumière.

14. Dispositif de transmission rotatif selon l'une des revendications 11 à 13, **caractérisé en ce qu'**un réflecteur ou un prisme (76) est disposé dans le parcours de conduction de lumière (68, 68') pour dévier un faisceau lumineux utilisé pour la transmission de données.

15. Dispositif de transmission rotatif selon la revendication 14, **caractérisé en ce que** les éléments émetteurs et récepteurs (56, 58' ; 56', 58) des groupes émetteurs et récepteurs mutuellement associés (64, 66' ; 64', 66) sont disposés sur un cercle ou segment de cercle respectif côté stator et côté rotor avec des rayons différents par paires par rapport à l'axe de rotation (12).
